# EUROPÄISCHE PATENTSCHRIFT

(11) **EP 1 783 392 B1**
(45) Veröffentlichungstag und Bekanntmachung des Hinweises auf die Patenterteilung: **30.07.2008**
(21) Anmeldenummer: 06022375.7
(22) Anmeldetag: 26.10.2006
(51) Int. Cl.: F16D 35/02, F04D 13/02, F01P 5/12

(54) **Regelbarer Antrieb für ein Kraftfahrzeug, insbesondere für eine Kühlmittelpumpe**
Adjustable drive for a vehicle, especially for a coolant pump
Dispositif d'entraînement réglable pour véhicule à moteur, en particulier pompe de refroidissement

(30) Priorität: 02.11.2005 DE 102005052559
(43) Veröffentlichungstag der Anmeldung: 09.05.2007
(73) Patentinhaber: Behr GmbH & Co. KG, 70469 Stuttgart (DE)
(72) Erfinder: Baumgartner, Roland, 71665 Vaihingen/Enz (DE); Maus, Ralf, 70825 Korntal-Münchingen (DE)
(74) Vertreter: Mantel, Berthold Friedrich

(56) Entgegenhaltungen:
- EP-A2- 1 326 028
- EP-A2- 1 566 526
- DE-A1- 19 533 641
- DE-A1- 19 645 478

## Beschreibung

Die Erfindung betrifft einen regelbaren Antrieb für ein Kraftfahrzeug, insbesondere für eine Kühlmittelpumpe nach dem Oberbegriff des Patentanspruches 1.

In der älteren Patentanmeldung der Anmelderin mit dem amtlichen Aktenzeichen 10 2004 009 073.4 ist ein regelbarer Antrieb für eine Kühlmittelpumpe eines Kraftfahrzeuges offenbart, wobei die Regelung vorzugsweise über eine regelbare Flüssigkeitsreibungskupplung erfolgt, welche zwischen den Antrieb, vorzugsweise eine Riemenscheibe, und das Laufrad der Kühlmittelpumpe geschaltet ist. Die Flüssigkeitsreibungskupplung wird über einen vorzugsweise als Magnetspule ausgebildeten Aktuator betätigt, welcher mit einem Anker zusammen wirkt, welcher Ventile zur Befüllung und Entleerung des Arbeitsraumes der Flüssigkeitsreibungskupplung betätigt. Der stationär verankerte Aktuator bzw. die Magnetspule ist in der älteren Patentanmeldung außerhalb der Kupplung angeordnet, während sich der von der Magnetspule beaufschlagte Anker innerhalb der Kupplung befindet; zwischen Magnetspule und Anker befindet sich daher eine aus unterschiedlichen Materialien aufgebaute Wand des Kupplungsgehäuses, wobei einerseits magnetisch nicht leitendes Material und andererseits magnetisch leitendes, d. h. ferromagnetisches Material vorgesehen ist. Nachteilig hierbei ist, dass der Magnetfluss von Spule zum Anker durch das trennende Kupplungsgehäuse gestört, d. h. in seiner Effektivität beeinträchtigt wird. Dies hat zur Folge, dass die Spule zur Erzeugung der erforderlichen Anzugskraft aufgrund der magnetischen Verluste größer dimensioniert werden muss, was zusätzliches Gewicht und zusätzliche Kosten bedeutet

Ausgehend von der vorgenannten älteren Patentanmeldung der Anmelderin, ist es Aufgabe der vorliegenden Erfindung, einen regelbaren Antrieb der eingangs genannten Art dahingehend zu verbessern, dass der Wirkungsgrad des Aktuators für die Betätigung der Regeleinrichtung erhöht wird und damit Gewicht und Kosten für den Antrieb eingespart werden.

Die Aufgabe wird durch die Merkmale des Patentanspruches 1 gelöst, wobei der Aktuator, respektive die Magnetspule innerhalb der Kupplung angeordnet ist. Zwischen Ankerplatte und Magnetspule befindet sich somit keine Kupplungswand bzw. festes Material, welches den Magnetfluss zwischen Spule und Anker stören könnte. Vielmehr kann sich aufgrund der erfindungsgemäßen Anordnung der Magnetspule innerhalb der Kupplung ein geschlossenes Magnetfeld ausbilden, wodurch sich die auf den Anker wirkende Anzugskraft erhöht. Dadurch kann die Magnetspule kleiner bemessen werden, was Gewicht und Kosten des gesamten Antriebes reduziert.

Die Magnetspule ist nach wie vor stationär verankert, während der Anker mit dem Kupplungsgehäuse bzw. dem Antriebskörper rotiert. Um eine Berührung zwischen Anker und Magnetspule zu vermeiden, ist erfindungsgemäß am Kupplungsgehäuse ein Anschlag vorgesehen, welcher die Axialbewegung des Ankers in Richtung auf die Magnetspule derart begrenzt, dass jeweils ein Spalt zwischen Anker und Magnetspule verbleibt.

Um den Magnetfluss weiter zur verbessern, ist die Magnetspule in einer im Querschnitt etwa hufeisenförmig ausgebildeten Umhüllung aus einem magnetisch leitenden Material angeordnet. Die Enden des U-förmigen Spulengehäuses ragen über die Spule in axialer Richtung hinaus und bilden mit dem konzentrisch angeordneten Anker einen geschlossenen, d. h. nicht unterbrochenen magnetischen Kreis. Die Feldlinien des magnetischen Kreises sind somit nicht gestört oder abgelenkt und verlaufen daher konzentriert und gebündelt. Damit wird der Vorteil erreicht, dass der Anker optimal im Magnetfluss liegt und eine relativ kleine Spule verwendet werden kann, um die erforderliche Anzugskraft aufzubringen.

Nach einer weiteren bevorzugten Ausführungsform der Erfindung ist die Magnetspule bzw. das Spulengehäuse mit einer Kunststoffumspritzung ummantelt, wobei die Ummantelung gleichzeitig als Halterung und zum Schutz der Magnetspule dient. Ferner kann die Umspitzung dazu genutzt werden, elektrische Zuleitungen aufzunehmen und zu schützen.

Nach einer weiteren vorteilhaften Ausgestaltung der Erfindung ist in den regelbaren Antrieb respektive das Kupplungsgehäuse ein Drehzahlmesser integriert, welcher mindestens einen, vorzugsweise sechs mit der Pumpenwelle rotierende Permanentmagnete und einen stationär angeordneten Drehzahlsensor nach dem bekannten Hall-Prinzip umfasst. Die Permanentmagnete sind vorzugsweise in einem als Kunststoffring ausgebildeten Halter fest mit der Welle verbunden. Der Drehzahlsensor ist vorteilhafterweise in der Kunststoffumspritzung untergebracht, d. h. eingegossen. Durch die Drehzahlmessung ist eine höhere Regelgüte erreichbar.

Der regelbare Antrieb ist nach einer bevorzugten Ausführungsform der Erfindung als an sich bekannte Flüssigkeitsreibungskupplung ausgebildet, wobei das über eine Riemenscheibe angetriebene Gehäuse eine auf der Welle angeordnete Kupplungsscheibe antreibt. Die Drehzahlregelung erfolgt durch Füllungsregelung im Arbeitsraum der Flüssigkeitsreibungskupplung. Ein Zulauf- und ein Rücklaufventil zwischen Arbeits- und Vorratsraum werden von dem Aktuator und dem Anker in Verbindung mit einer Rückstellfeder betätigt.

Nach einer vorteilhaften Ausgestaltung der Erfindung ist die Flüssigkeitsreibungskupplung auf dem Hals eines Gehäuses der Kühlmittelpumpe gelagert, vorzugsweise mittels eines zweireihigen Wälzlagers. Zwischen dem Lager und der Kupplungsscheibe sind die Magnetspule und der Anker angeordnet. Dies ergibt eine kompakte Bauweise.

Ein Ausführungsbeispiel der Erfindung ist in der Zeichnung dargestellt und wird im Folgenden näher beschrieben. Es zeigen
- Fig. 1: einen Schnitt durch einen regelbaren Antrieb für eine Kühlmittelpumpe,
- Fig. 2: einen Teilschnitt durch den Hals des Kühlmittelpumpengehäuses und
- Fig. 3: einen Teilschnitt durch eine Vorrichtung zur Drehzahlmessung im Bereich der Magnetspule.

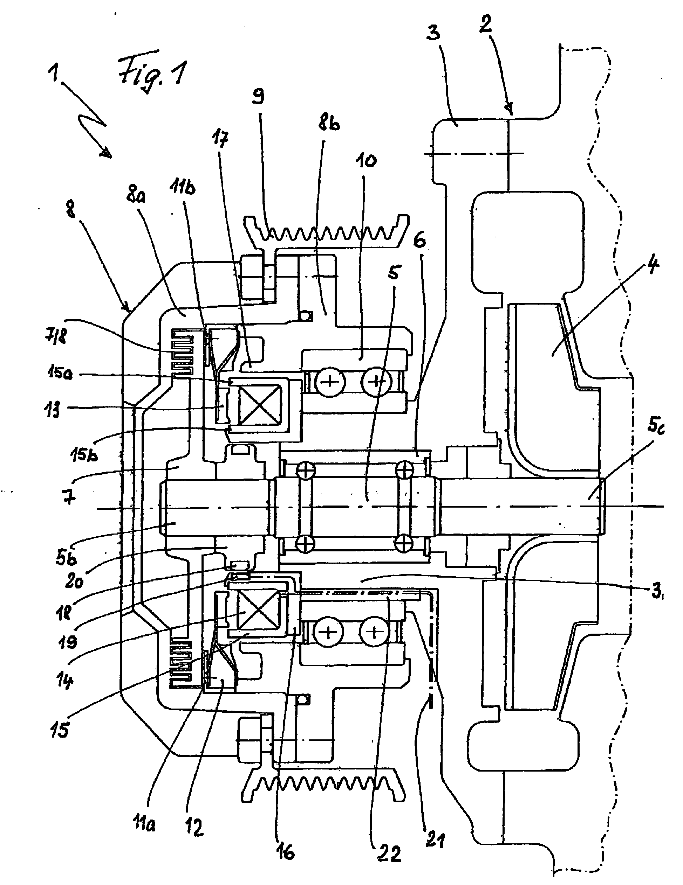

**Fig. 1** zeigt einen regelbaren Antrieb 1 für eine Kühlmittelpumpe 2 eines nicht dargestellten Kraftfahrzeuges. Die Kühlmittelpumpe 2 weist ein Gehäuse 3 mit einem Hals 3a sowie ein Pumpenrad 4 auf, welches auf einem Wellenende 5a einer Pumpenwelle 5 drehfest angeordnet ist. Die Pumpenwelle 5 ist im Hals 3a über ein zweireihiges Rillenkugellager 6 gelagert. Auf einem Wellenende 5b ist eine Kupplungsscheibe 7 drehfest angeordnet, welche Teil einer Flüssigkeitsreibungskupplung ist, welche ferner ein antreibendes Kupplungsgehäuse 8, bestehend aus Kupplungsdeckel 8a und Kupplungsgrundkörper 8b, aufweist. Das Kupplungsgehäuse 8 wird durch eine Riemenscheibe 9 angetrieben, welche ihrerseits durch einen nicht dargestellten Riementrieb durch die Brennkraftmaschine des Kraftfahrzeuges angetrieben wird. Das Kupplungsgehäuse 8 wird über den Grundkörper 8b über ein Kupplungslager 10, vorzugsweise als zweireihiges Rillenkugellager ausgebildet, gegenüber dem Hals 3a des Pumpengehäuses 3 drehbar abgestützt. Die aus dem nicht dargestellten Riementrieb resultierenden Kräfte werden somit relativ direkt in den Hals 3a des Pumpengehäuses 3 eingeleitet. Die Flüssigkeitsreibungskupplung 7, 8 ist prinzipiell gleich ausgebildet, wie in der älteren Patentanmeldung der Anmelderin mit dem Aktenzeichen 10 2004 009 073.4 beschrieben, welche vollumfänglich in den Offenbarungsgehalt der vorliegenden Anmeldung einbezogen wird. Der Füllungsgrad der Flüssigkeitsreibungskupplung 7, 8 im Kupplungsbereich (Arbeitsraum 7/8) wird somit über mindestens zwei Ventile 11a, 11b ein Zuführventil und eine Abpumpeinrichtung, in Verbindung mit einer Rückstellfeder 12, an welcher eine ringförmige Ankerplatte 13 angeordnet ist, geregelt. Koaxial zur Ankerplatte 13 ist ein als Magnetspule 14 ausgebildeter Aktuator stationär angeordnet, d. h. stirnseitig am Hals 3a des Pumpengehäuses 3 befestigt. Die Magnetspule 14 wird von einem im Querschnitt U-förmig ausgebildeten, magnetisch leitenden Spulengehäuse 15 eingefasst und von einer Kunststoffumspritzung 16 ummantelt. Die Magnetspule 14 befindet sich somit mit ihrem Spulengehäuse 15 innerhalb des Kupplungsgehäuses 8 in unmittelbarer Nähe der axial bewegbaren Ankerplatte 13. Am Kupplungsgehäuse, d. h. am Kupplungsgrundkörper 8b ist ein etwa ringförmig ausgebildeter Anschlag 17 angeordnet, welcher die axiale Bewegung der Ankerplatte 13 in Richtung auf die Magnetspule 14 begrenzt. Damit ist sichergestellt, dass die mit dem Kupplungsgehäuse 8 rotierende Ankerplatte 13 nicht in Berührung mit der feststehenden Magnetspule 14 bzw. dem Spulengehäuse 15 kommt; es verbleibt also bei angezogener Ankerplatte 13 jeweils ein Spalt. Das Spulengehäuse 15 weist zwei U-Schenkel auf, deren Enden 15a, 15b in axialer Richtung über die Magnetspule 14 hinausstehen und einen nicht dargestellten Magnetkreis mit der Ankerplatte 13 bilden. Dadurch ergeben sich ein ungestörter Magnetfluss und eine hohe Anziehungskraft.

Der regelbare Antrieb 1 weist ferner eine integrierte Vorrichtung zur Drehzahlmessung auf, welche aus mit der Pumpenwelle 5 rotierenden Permanentmagneten 18 und einem feststehenden Drehzahlsensor 19, welcher nach dem bekannten Hall-Prinzip arbeitet und in der Kunststoffumspritzung 16 aufgenommen ist, besteht. Die Permanentmagnete 18 sind in einem Kunststoffring 20 angeordnet, welcher drehfest mit der Pumpenwelle 5 verbunden ist. Die Stromzuführung zur Magnetspule 14 und zum Drehzahlsensor 19 erfolgt über elektrische Kabel 21, welche einerseits in der Kunststoffumspritzung 16 aufgenommen und andererseits durch eine in axialer Richtung innerhalb des Kupplungslagers 10 verlaufende Aussparung 22 im Hals 3a nach außen geführt sind.

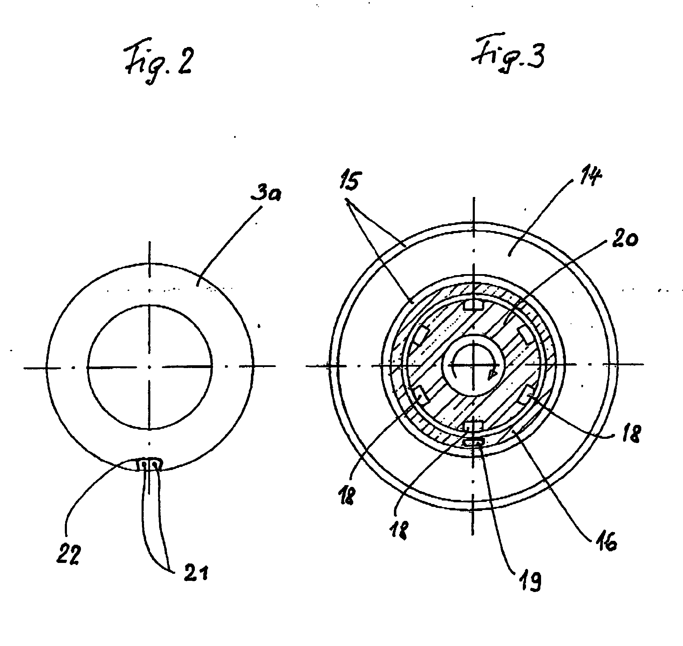

**Fig. 2** zeigt einen Teilschnitt durch den Hals 3a des Pumpengehäuses 3 mit der Aussparung 22, in welcher die beiden elektrischen Kabel 21 aufgenommen und geführt sind. Damit sind die Kabel 21 geschützt, insbesondere bei der Montage des Kupplungslagers 10 auf den Hals 3a sowie der Magnetspule 14, 15.

**Fig. 3** zeigt einen Teilschnitt durch die Einrichtung zur Drehzahlmessung, d. h. im Bereich des Ringes 20 und des Drehzahlsensors 19- Auf dem Umfang des Ringes 20 sind sechs Permanentmagnete 18 in dem aus magnetisch nicht leitendem Material, z. B. Kunststoff bestehenden Ring 20 angeordnet. Der Drehzahlsensor 19 ist in geringem radialen Abstand in die Kunststoffumspritzung 16 eingelassen (eingegossen). Damit kann die Drehzahl der Pumpenwelle gemessen und einer nicht dargestellten Regeleinrichtung zugeführt werden. Die Magnetspule 14 und das Spulengehäuse 15 werden von der Kunststoffumspritzung 16 getragen.

## Patentansprüche

1. Regelbarer Antrieb (1) für ein Kraftfahrzeug, insbesondere für eine Kühlmittelpumpe (2) mit einer drehbar gelagerten Welle (5), einem drehfest auf der Welle (5) gelagerten Abtriebskörper (7), einem gegenüber der Welle (5) drehbar gelagerten Antriebskörper (9) und einem zwischen dem Antriebs- und dem Abtriebskörper (9, 7) angeordneten, ein viskoses Fluid aufnehmenden Kupplungsbereich (718), mit wenigstens einem ersten und wenigstens einem zweiten Strömungspfad, welche einen Fluidvorratsraum mit dem Kupplungsbereich (7/8) verbinden, mit einer von einem Aktuator (14) betätigbaren Einrichtung (11a, 11b, 12, 13), welche wenigstens eine Durchgangsöffnung wenigstens eines Strömungspfades verändert, **dadurch gekennzeichnet, dass**
- mit dem Antriebskörper (9) ein Kupplungsgehäuse (8, 8a, 8b) verbunden und
- der Aktuator (14) innerhalb des Kupplungsgehäuses (8, 8a, 8b) angeordnet ist

2. Antrieb nach Anspruch 1, **dadurch gekennzeichnet, dass** der Aktuator (14) eine stationär verankerte Magnetspule (14) aufweist.

3. Antrieb nach Anspruch 2, **dadurch gekennzeichnet, dass** der Magnetspule (14) ein axial bewegbarer Anker (13) zugeordnet ist, welcher unmittelbar von der Magnetspule (14) beaufschlagbar ist.

4. Antrieb nach Anspruch 3, **dadurch gekennzeichnet, dass** die vom Aktuator (14) Ober den Anker (13) betätigbare Einrichtung mindestens zwei Ventile (11a, 11b) umfasst.

5. Antrieb nach Anspruch 4, **dadurch gekennzeichnet, dass** der Abtriebskörper (7), das Kupplungsgehäuse (8), der Kupplungsbereich (7/8), der Fluidvorratsraum, die Strömungspfade und die Ventile (11a, 11 b) Teile einer Flüssigkeitsreibungskupplung sind.

6. Antrieb nach mindestens einem der vorhergehenden Ansprüche, **dadurch gekennzeichnet, dass** das Kupplungsgehäuse (8b) im Bereich der Magnetspule (14) einen vorzugsweise ringförmig ausgebildeten Anschlag (17) aufweist, welcher die Axialbewegung des Ankers (13) in Richtung der Magnetspule (14) begrenzt.

7. Antrieb nach mindestens einem der vorhergehenden Ansprüche, **dadurch gekennzeichnet, dass** die Magnetspule (14) eine aus magnetisch leitendem Material bestehende Umhüllung (Spulengehäuse 15) aufweist, vorzugsweise mit U-förmigem Querschnitt und dass der Anker (13) in einem von der Magnetspule (14) induzierbaren Magnetkreis angeordnet ist.

8. Antrieb nach Anspruch 7, **dadurch gekennzeichnet, dass** die Magnetspule (14) mit Spulengehäuse (15) in einer Kunststoffumspritzung (16) aufgenommen ist

9. Antrieb nach mindestens einem der vorhergehenden Ansprüche, **dadurch gekennzeichnet, dass** innerhalb des Kupplungsgehäuses (8) eine Vorrichtung (18, 19) zur Drehzahlmessung angeordnet ist.

10. Antrieb nach Anspruch 9, **dadurch gekennzeichnet, dass** die Vor richtung mindestens einen mit der Welle (5) rotierenden Permanentmagneten (18) und einen stationär angeordneten Drehzahlsensor (19), vorzugsweise nach dem bekannten Hall-Prinzip arbeitend, aufweist.

11. Antrieb nach Anspruch 10, **dadurch gekennzeichnet, dass** der mindestens eine Permanentmagnet (18) in einem ringförmigen, auf der Welle (5) befestigten, vorzugsweise aus Kunststoff herstellbaren Halter (20) angeordnet ist.

12. Antrieb nach Anspruch 10 oder 11, **dadurch gekennzeichnet, dass** der Drehzahlsensor (19) innerhalb der Kunststoffumspritzung (16) angeordnet ist.

13. Antrieb nach mindestens einem der vorhergehenden Ansprüche, **dadurch gekennzeichnet, dass** die Welle (5) im Hals (3a) eines Kühlmittelpumpengehäuses (3) und das Kupplungsgehäuse (8b) auf dem Hals (3a) lagerbar sind.

14. Antrieb nach Anspruch 13, **dadurch gekennzeichnet, dass** die Magnetspule (14, 15) stirnseitig am Hals (3a) befestigt ist.

15. Antrieb nach Anspruch 13 oder 14, **dadurch gekennzeichnet, dass** die Magnetspule (14) und/oder der Drehzahlsensor (19) mit elektrischen Kabeln (21) verbunden sind, welche über eine Aussparung (22) im Hals (3a) des Pumpengehäuses (3) aus dem Kupplungsgehäuse (8) herausgeführt sind.

## Claims

1. Controllable drive (1) for a motor vehicle, in particular for a coolant pump (2), comprising a rotatably mounted shaft (5), a driven member (7) non-rotatably mounted on the shaft (5), a drive member (9) rotatably mounted relative to the shaft (5) and a coupling region (7/8) located between the driven and the drive member (9, 7) and holding a viscous fluid, with at least one first and at least one second flow path connecting a fluid reservoir to the coupling region (7/8), with a device (11a, 11b, 12, 13) operated by an actuator (14) for controlling at least one through opening of at least one flow path, **characterised in that**
- a coupling housing (8, 8a, 8b) is connected to the drive member (9) and
- the actuator (14) is located within the coupling housing (8, 8a, 8b).

2. Drive according to claim 1, **characterised in that** the actuator (14) comprises a magnet coil (14) which is anchored in a stationary manner.

3. Drive according to claim 2, **characterised in that** an axially movable armature (13) capable of being acted on directly by the magnet coil (14) is assigned to the magnet coil (14).

4. Drive according to claim 3, **characterised in that** the device operated by the actuator (14) via the armature (13) comprises at least two valves (11a, 11b).

5. Drive according to claim 4, **characterised in that** the driven member (7), the coupling housing (8), the coupling region (7/8), the fluid reservoir, the flow paths and the valves (11a, 11b) are components of a viscous friction coupling.

6. Drive according to one or more of the preceding claims, **characterised in that** the coupling housing (8b) comprises a preferably annular stop (17) in the region of the magnet coil (14) to limit the axial movement of the armature (13) in the direction of the magnet coil (14).

7. Drive according to one or more of the preceding claims, **characterised in that** the magnet coil (14) comprises a casing (coil casing 15) made from a magnetically conductive material and preferably having a U-shaped cross-section, and **in that** the armature (13) is located in a magnetic circuit which can be induced by the magnet coil (14).

8. Drive according to claim 7, **characterised in that** the magnet coil (14) with the coil casing (15) is held in a plastic encapsulation.

9. Drive according to one or more of the preceding claims, **characterised in that** a speed measuring device (18, 19) is provided within the coupling housing (8).

10. Drive according to claim 9, **characterised in that** the device comprises at least one permanent magnet (18) rotating with the shaft (5) and a stationary speed sensor (19), which preferably operates according to the known Hall principle.

11. Drive according to claim 10, **characterised in that** the at least one permanent magnet (18) is located in an annular holder (20) secured to the shaft (5) and preferably made of plastic.

12. Drive according to claim 10 or 11, **characterised in that** the speed sensor (19) is located within the plastic encapsulation (16).

13. Drive according to one or more of the preceding claims, **characterised in that** the shaft (5) is capable of being bearing-mounted in the throat (3a) of a coolant pump housing (3) and the coupling housing (8) is capable of being bearing-mounted on the throat (3a).

14. Drive according to claim 13, **characterised in that** the magnet coil (14, 15) is secured to the end face of the throat (3a).

15. Drive according to claim 13 or 14, **characterised in that** the magnet coil (14) and/or the speed sensor (19) are/is connected to electric cables (21) routed out of the coupling housing (8) through a recess (22) in the throat (3a) of the pump housing (3).

## Revendications

1. Entraînement réglable (1) pour un véhicule automobile, en particulier pour une pompe à liquide de refroidissement (2) comprenant un arbre (5) monté en rotation, un corps mené (7) monté solidaire en rotation sur l'arbre (5), un corps d'entraînement (9) pouvant tourner par rapport à l'arbre (5) et une zone d'embrayage (7/8) disposée entre le corps d'entraînement et le corps mené (9, 7) et recevant un fluide visqueux, comprenant au moins une première trajectoire et une deuxième trajectoire d'écoulement qui relient un espace d'alimentation en fluide, à la zone d'embrayage (7/8), comprenant un dispositif (11a, 11b, 12, 13) pouvant être commandé par un actionneur (14), dispositif qui modifie au moins une ouverture de passage d'au moins une trajectoire d'écoulement,
**caractérisé**
- **en ce qu'**un carter d'embrayage (8, 8a, 8b) est raccordé au corps d'entraînement (9) et
- l'actionneur (14) disposé à l'intérieur du carter d'embrayage (8, 8a, 8b).

2. Entraînement selon la revendication 1, **caractérisé en ce que** l'actionneur (14) présente une bobine magnétique (14) ancrée fixement.

3. Entraînement selon la revendication 2, **caractérisé en ce qu'**un induit (7.3) mobile axialement est associé à la bobine magnétique (14), lequel induit peut être alimenté directement par la bobine magnétique (14).

4. Entraînement selon la revendication 3, **caractérisé en ce que** le dispositif pouvant être commandé par l'actionneur (14), via l'induit (13), comprend au moins deux vannes (11a, 11b).

5. Entraînement selon la revendication 4, **caractérisé en ce que** le corps mené (7), le carter d'embrayage (8), la zone d'embrayage (7/8), l'espace d'alimentation en fluide, les trajectoires d'écoulement et les vannes (11a, 11b) sont des éléments constitutifs d'un embrayage par frottement entre liquides.

6. Entraînement selon au moins l'une quelconque des revendications précédentes, **caractérisé en ce que** le carter d'embrayage (8b) présente, dans la zone de la bobine magnétique (14), une butée (17) configurée en ayant, de préférence, une forme annulaire, butée qui limite le déplacement axial de l'induit (13) en direction de la bobine magnétique (14).

7. Entraînement selon au moins l'une quelconque des revendications précédentes, **caractérisé en ce que** la bobine magnétique (14) présente une enveloppe (carter de bobine 15) se composant d'un matériau magnétiquement conducteur ayant de préférence une section en forme de U, et **en ce que** l'induit (13) est disposé dans un circuit magnétique pouvant être aimanté, par induction, par la bobine magnétique (14).

8. Entraînement selon la revendication 7, **caractérisé en ce que** la bobine magnétique (14) est logée, avec le carter (15) de la bobine, dans un enrobage (16) en matière plastique moulée par injection.

9. Entraînement selon au moins l'une quelconque des revendications précédentes, **caractérisé en ce qu'**un dispositif (18, 19) servant à mesurer la vitesse de rotation est disposé à l'intérieur du carter d'embrayage (8).

10. Entraînement selon la revendication 9, **caractérisé en ce que** le dispositif présente au moins un aimant permanent (18) tournant avec l'arbre (5) et un capteur de vitesse de rotation (19) disposé fixement, fonctionnant de préférence d'après le principe connu de Hall.

11. Entraînement selon la revendication 10, **caractérisé en ce que** l'aimant permanent (18), au moins au nombre de un, est disposé dans un élément de retenue (20), de forme annulaire, fixé sur l'arbre (5), et fabriqué de préférence en matière plastique.

12. Entraînement selon la revendication 10 ou 11, **caractérisé en ce que** le capteur de vitesse de rotation (19) est disposé à l'intérieur de l'enrobage (16) en matière plastique moulée par injection.

13. Entraînement selon au moins l'une quelconque des revendications précédentes, **caractérisé en ce que** l'arbre (5) peut être logé dans la gorge de dégagement (3a) d'un corps de pompe à liquide de refroidissement (3), et le carter d'embrayage (8b) peut être logé sur la gorge de dégagement (3a).

14. Entraînement selon la revendication 13, **caractérisé en ce que** la bobine magnétique (14, 15) est fixée, côté frontal, sur la gorge de dégagement (3a).

15. Entraînement selon la revendication13 ou 14, **caractérisé en ce que** la bobine magnétique (14) et / ou le capteur de vitesse de rotation (19) sont raccordés à des câbles électriques (21) qui sont guidés hors du carter d'embrayage (8), par un évidement (22) réalisé dans la gorge de dégagement (3a) du corps (3) de la pompe.
